# EUROPÄISCHE PATENTSCHRIFT

(11) **EP 3 500 624 B1**
(45) Veröffentlichungstag und Bekanntmachung des Hinweises auf die Patenterteilung: **09.12.2020**
(21) Anmeldenummer: 17748415.1
(22) Anmeldetag: 18.07.2017
(51) Int. Cl.: C08K 5/17, C08K 5/3415, C08K 5/3447

(54) **VERNETZUNGSMITTELZUSAMMENSETZUNG FÜR ELASTOMERE**
CROSS-LINKING AGENT COMPOSITION FOR ELASTOMERS
COMPOSITION D'AGENT DE RÉTICULATION POUR ÉLASTOMÈRES

(30) Priorität: 19.08.2016 DE 102016115464
(43) Veröffentlichungstag der Anmeldung: 26.06.2019
(73) Patentinhaber: ElringKlinger AG, 72581 Dettingen (DE)
(72) Erfinder: HORNIG, Roy, 72574 Bad Urach (DE)
(74) Vertreter: Hoeger, Stellrecht & Partner Patentanwälte mbB
(86) Internationale Anmeldenummer: PCT/EP2017/068090
(87) Internationale Veröffentlichungsnummer: WO 2018/033327

(56) Entgegenhaltungen:
- DE-A1-102008 020 196
- US-A1- 2012 088 887

## Beschreibung

Die Erfindung betrifft Vernetzungsmittelzusammensetzungen für Elastomere, die sich diaminisch vernetzen lassen.

Solche Elastomere umfassen eines oder mehrere der Elastomere aus der Gruppe von hydriertem Acrylnitrilbutadien-Kautschuk (HNBR), Acrylat-Kautschuk (ACM), Ethylen-Acrylat-Copolymerisat (EACM), auch Ethylen-Acrylat-Kautschuk (AEM) genannt, Vinylacetat-Ethylen-Acrylat-Kautschuk (DENKA) sowie diaminisch vernetzbarem Fluorkarbon-Kautschuk (FKM).

In der Vergangenheit wurden mit Guanidinbeschleunigersystemen, insbesondere N,N'-Di-o-Tolylguanidin (DOTG), gute Vernetzungsergebnisse bei auf den vorstehend genannten Elastomeren basierenden Elastomermaterialien erzielt. Bezüglich der Reißdehnung gibt es bei Mischungs-optimierten Druckverformungsrestwerten schlechte Werte-Niveaus, insbesondere auch bei Elastomermaterialien mit hohen Füllstoffgehalten.

Die Guanidinbeschleuniger sind aufgrund der in ihnen enthaltenen potenziell krebserregenden Nebenprodukte in die Kritik geraten, so dass alternativ auf Vernetzungsmittelzusammensetzung mit Beschleunigern auf der Basis von 1,8-Diazabicyclo[5,4,0]undec-7-ene (DBU) in Kombination mit verschiedenen Aktivatoren gesetzt wurde. Ein Beispiel hierfür findet sich in der DE 10 2008 020 196 A1.

Diese alternativen Vernetzungsmittelzusammensetzungen sind jedoch bei Elastomermaterialien mit hohen Anteilen an Füllstoffen insofern nachteilig, als gegenüber den früher verwendeten Vernetzungsmittelzusammensetzungen mit Guanidinbeschleunigern weniger ausgewogene technische Eigenschaften, insbesondere in Bezug auf die Abstimmung von Reißdehnung und Druckverformungsrest, erhalten werden.

Die Erfahrung mit den DBU-basierenden Vernetzungsmittelzusammensetzungen zeigt, dass, um gute Druckverformungsrestwerte mit den Vernetzungsmittelzusammensetzungen zu erzielen, die Beschleuniger auf DBU-Basis enthalten, relativ hohe Vernetzungsdichten notwendig sind, welche sich jedoch in abnehmenden Reißdehnungswerten (DIN 53504S2) bemerkbar machen.

Aus der U.S.-Patentanmeldung US 2012/0088887 A1 sind Vernetzungsmittelzusammensetzungen für Elastomermaterialien bekannt, in denen DOTG-Beschleuniger durch eine reine Mischung von Aldehyd-Amin-Kondensationsprodukten und aliphatischen Aminen ersetzt wurden. Nachteilig bei diesen Vernetzungsmittelzusammensetzungen ist, dass die damit vernetzten Elastomermaterialien einen zu hohen Wärmedruckverformungsrest (Wärme-DVR) aufweisen, gemessen nach ISO 815, Teil 1 und 2.

Aufgabe der vorliegenden Erfindung ist es deshalb, eine Vernetzungsmittelzusammensetzung mit einem diaminischen Vernetzungsmittel vorzuschlagen, die im Verhältnis der maximal erreichbaren Reißdehnung zum Wärme-DVR-Niveau vergleichbare oder bessere Werte als die Vernetzungsmittelzusammensetzungen mit dem Guanidinbeschleuniger erzielen, und dies auch bei hohen Füllstoffgehalten der Elastomermaterialien.

Diese Aufgabe wird erfindungsgemäß durch eine Vernetzungsmittelzusammensetzung mit den Merkmalen des Anspruchs 1 gelöst.

Die erfindungsgemäßen Vernetzungsmittelzusammensetzungen eignen sich insbesondere für die Vernetzung von diaminisch vernetzbaren Elastomermaterialien, insbesondere Elastomermaterialien, die die eingangs erwähnten Elastomere enthalten.

Die Erfindung betrifft des Weiteren Elastomermaterialien mit einer erfindungsgemäßen Vernetzungsmittelzusammensetzung sowie Dichtungen mit einem Elastomerdichtungselement, die unter Verwendung der erfindungsgemäßen Elastomermaterialien hergestellt sind.

Im Folgenden seien die einzelnen Aspekten der vorliegenden Erfindung näher dargestellt:
Die erfindungsgemäßen Vernetzungsmittelzusammensetzungen lassen sich mit einer breiten Palette von diaminischen Vernetzern realisieren. Besonders bevorzugte diaminische Vernetzungsmittel sind ausgewählt aus Hexamethylendiamincarbamat, N,N-Dicinnamylidendiamincarbamat, 4,4-Diaminodicyclohexylmethan, m-Xylylendiamin, 4,4-Diaminodiphenylmethan, 4,4-Diaminodiphenylether, 2,2-Bis[4-(4-aminophenoxy)phenyl]propan sowie Hexamethylendiaminen.

Der Aktivator vom Pyrrolidontyp wird insbesondere ausgewählt aus 2-Pyrrolidon, N-Methylpyrrolidon und Polyvinylpyrrolidon.

Das aliphatische Amin wird schließlich ausgewählt aus sekundären Aminen und tertiären Aminen sowie Mischungen hiervon.

Bevorzugte Beispiele für sekundäre und tertiäre Amine umfassen Fettsäureamine, insbesondere Di-kokos-alkylamin (di-coco-alkyl amine, DCAA), Di-(hydriertes Talgfett)-amin (bis(hydrogenated tallow alkyl) amine, BHTAA) und Di-stearylamin, Behenyl-dimethylamin, Octadecyl-dimethylamin, Di-kokosalkyl-methyl-amin (di-coco-alkyl methyl amine, DCMAA), Di-(hydriertes Talgfett)-methyl-amin (bis(hydrogenated tallow alkyl) methyl amine, BHTMAA) und Di(hydriertes Talgfett)-s-alkyl-amin (bis(hydrogenated tallow) secondary alkyl amine (BHTAsA) (erhältlich als Aldogen 343HP von Evonik), sowie das Tri-Hexadecylamin (erhältlich als Armeen 316 von AkzoNobel).

Des Weiteren eignen sich aldehydische Amine in Kombination mit den aliphatischen Aminen als Zusatz zum DBU-haltigen Beschleuniger.

Aldehydische Amine umfassen das 3,5-Diethyl-1,2-dihydro-1-phenyl-2-propyl-pyridin (PDHP), Kondensationsprodukte aus Butyraldehyld und Anilin (B-a-rxn) und Kondensationsprodukte aus Butyraldehyd und Butylamin.

Der Beschleuniger vom DBU-Typ kann beispielsweise in Form von Vulcofac ACT 55, Vulcofac ACT 66 oder auch ALCANPOUDRE DBU-70 eingesetzt werden (alle diese DBU-Typen sind von Safic-Alcan Deutschland GmbH erhältlich). Des Weiteren eignen sich DBU-Beschleuniger, die zusammen mit einem Moderator am Markt angeboten werden, beispielsweise Rhenogran XLA 60, das Zinkdithiophosphat (ZnDTP) als Moderator enthält (erhältlich von Rheinchemie), Luvomaxx Safe Cure CA, das einen basischen Moderator enthält (erhältlich von Lehmann & Voss), sowie Accelor 50 (erhältlich von SEC), welches einen DBU-Beschleuniger in Abmischung mit NPC 50 (eine quarternäre Ammoniumverbindung, erhältlich von ZEON Chemicals) als Moderator enthält.

In den erfindungsgemäßen Elastomermaterialien finden vorzugsweise die eingangs genannten Elastomere, einzeln oder in einer Mischung miteinander, Verwendung.

Bei den AEM- und ACM-Elastomeren sind diejenigen bevorzugt, die der diaminischen Vernetzung zugängliche Cure-Site-Monomereinheiten umfassen, deren Gehalt in den Elastomeren vorzugsweise ca. 1 bis ca. 5 Gew.-%, weiter bevorzugt ca. 2 bis ca. 3 Gew.-% beträgt.

Bevorzugte AEM-Elastomere sind z.B. unter der Bezeichnung VAMAC® von DuPont erhältlich, insbesondere aus der VAMAC VMX 5000-Reihe, beispielsweise VMX 5020 und VMX 5015.

Bevorzugte ACM-Elastomere werden unter der Handelsbezeichnung Nipol® und HyTemp® von Zeon Chemicals vertrieben. Darüber hinaus bieten Tohpe Corporation, Unimatec (Noxtite) und Nippon Mectronic diaminisch vernetzbare ACM-Elastomere des diaminisch vernetzbaren Typs an.

Besonders bevorzugt wird der Beschleuniger vom DBU-Typ in den erfindungsgemäßen Elastomermaterialien mit einem Anteil von ca. 1 bis ca. 10 phr (phr = parts per hundred rubber), vorzugsweise ca. 2 bis ca. 4 phr, vorhanden sein.

Der Gewichtsanteil des Aktivators vom Pyrrolidon-Typ in der erfindungsgemäßen Vernetzungsmittelzusammensetzung beträgt, bezogen auf den Anteil des Beschleunigers vom DBU-Typ, vorzugsweise ca. 10 bis ca. 50 Gew.-%.

Das Gewichtsverhältnis des Beschleunigers vom DBU-Typ zur Summe der Anteile der erfindungsgemäß zugegebenen aliphatischen und gegebenenfalls aldehydischen Amine in der erfindungsgemäßen Vernetzungsmittelzusammensetzung beträgt bevorzugt ca. 25 : 75 bis ca. 99 : 1, weiter bevorzugt ca. 40 : 60 bis ca. 60 : 40.

Der Gewichtsanteil des aliphatischen Amins oder der aliphatischen Amine (sekundäre und/oder tertiäre Amine) beträgt in dem Elastomermaterial vorzugsweise ca. 0,1 phr bis ca. 2,9 phr, weiter bevorzugt ca. 1 phr bis ca. 1,5 phr.

Das Vernetzungsmittel, beispielsweise Hexamethylendiamincarbamat (HMDC), liegt in dem erfindungsgemäßen Elastomermaterial in einer Konzentration von ca. 1 phr bis ca. 4 phr, vorzugsweise ca. 1,5 phr bis ca. 2,5 phr, vor.

Alternativ kann auch 1,6-Hexamethylendiamin (HMD, CAS 124-09-4, beispielsweise erhältlich als ADVANCURE von Chem Technologies, Ltd.) oder ein aromatisches Amin, z.B. 2,2-(4-(4-Aminophenoxy)phenyl)propan (zu 50 Gew.-% in Cheminox CLP 5250 enthalten; erhältlich von UNIMATEC Chemicals Europe GmbH & Co. KG) in den oben angegebenen Mengenverhältnissen verwendet werden.

Die erfindungsgemäßen Elastomermaterialien weisen insbesondere einen Füllstoff mit einem Anteil von ca. 50 phr oder mehr auf. Bevorzugt wird der Füllstoff-Anteil ca. 120 phr oder weniger betragen.

Bevorzugte Füllstoffe der erfindungsgemäßen Elastomermaterialien sind ausgewählt aus inaktiven bis aktiven Ruß-Typen, hellen Füllstoffen wie z.B. Kieselsäuren, Kaolinen, Glimmer, Feldspat, Talkum, Calciumcarbonat, Quarz, Kieselgur, Cristobalit, Bariumsulfat (in natürlich vorkommender oder gefällter Form).

Darüber hinaus können die erfindungsgemäßen Elastomermaterialien herkömmliche Additive wie z.B. Verarbeitungshilfsmittel, Weichmacher etc. enthalten.

Die Erfindung betrifft schließlich, wie eingangs erwähnt, Dichtungen umfassend ein Elastomerdichtungselement, welches unter Verwendung der erfindungsgemäßen Elastomerzusammensetzung hergestellt ist.

Dabei kann die Dichtung einen Träger umfassen, auf welchem das Elastomerdichtungselement angeordnet ist.

Des Weiteren kann die erfindungsgemäße Dichtung einen Träger umfassen, welcher teilweise oder vollständig von dem Elastomerdichtungselement umgeben ist.

Mit den erfindungsgemäßen Elastomermaterialien lassen sich typische Bindemittelsysteme für die chemische Anbindung von Elastomermaterialien an Metallsubstrate verwenden, wie z.B. Silan-Phenolharzgemische (erhältlich als Chemosil oder Chemlok 512).

Schließlich ermöglicht die vorliegende Erfindung Dichtungen, bei denen die Dichtung im Wesentlichen aus dem Elastomerdichtungselement gebildet ist. Zudem kann die vorliegende Erfindung für Dichtungssysteme eingesetzt werden, bei denen aneinandergrenzende Dichtungssegmente zum Einen von bisphenolisch oder diaminisch vernetzenden FKM-Mischungen und zum Anderen von den vorstehend genannten Elastomermaterialien gebildet werden, chemisch miteinander verbunden werden und somit in den verschiedenen Dichtungssegmenten verschiedene Werkstoffe die unterschiedlichen Anforderungen an die Gesamtdichtung abdecken, wie dies aus der DE 10 2007 032 149 A1 an sich bekannt ist.

Die Dichtungen der vorliegenden Erfindungen finden beispielsweise Verwendung als Ölwannendichtung. Darüber hinaus lassen sich mit den erfindungsgemäßen Elastomermaterialien auch Schlauchmaterialien für den Kraftstoffbereich oder auch Abgasdichtungen, beispielsweise Membranen, Dichtungen im Ansaug- und Ventildeckelbereich, Ventilklappen und -stecker, Getriebeschaltkolben, Steuergehäuse-Dichtungen, Ölabdichtungen am Getriebegehäuse, Zahnriemen und Entkopplungselemente herstellen.

Dies zeigt, dass die erfindungsgemäßen Dichtungen mit den erfindungsgemäßen Elastomermaterialien für eine große Palette von Einsatzgebieten mit jeweils optimierten Eigenschaften herstellbar sind.

Die Erfindung wird im Folgenden anhand der Beispiele noch näher erläutert.

### BEISPIELE

### Beispiel 1:

Gemäß einem ersten Beispiel werden verschiedene Beispielrezepturen auf der Basis eines AEM-Elastomers aus 50 Gewichtsteilen Vamac G und 50 Gewichtsteilen Vamac ULTRA IP (= zusammen 100 Gewichtsteile Elastomer; beide Materialien erhältlich von DuPont) mit 55 phr Füllstoff in Form von Ruß N772 sowie verschiedenen Vernetzungsmittelzusammensetzungen wie in der folgenden Tabelle 1 im Einzelnen gelistet verwendet.

Ferner enthalten alle Beispielrezepturen die folgenden Additive:
1 phr Stearinsäure als Verarbeitungshilfsmittel
15 phr Weichmacher (Bisoflex T810T, Trimellitsäure-Ester CAS 67989-23-5),
1 phr Polyoxyethylenoctadecyletherphosphat (VANFRE VAM; CAS 62362-49-6) als internes Trennmittel,
0,5 phr Octadecylamin als Fließhilfsmittel sowie
2 phr Dicumyldiphenylamin (CAS 10081-67-1; erhältlich als Dusantox 86 von Duslo a.s.) als Oxidationsschutzmittel.

Das Vulcofac ACT66 (erhältlich von Safic-Alcan) enthält neben dem Beschleuniger DBU (Gewichtsanteil 52,5 %) 2-Pyrrolidon als Aktivator mit einem Anteil von 17,5 Gew.-%.

**TABELLE 1**

| **Beispiel** | **1A** | **1B** | **1C** | **1D** |
|---|---|---|---|---|
| Vulcofac ACT66 [phr] | - | 1,5 | 2,0 | 3,0 |
| (DBU-Anteil) [phr] | (-) | (0,788) | (1,05) | (1,575) |
| (2-Pyrrolidon-Anteil) [phr] | (-) | (0,263) | (0,35) | (0,525) |
| aliphat. Amin BHTAA 50%-ig [phr] | 6,0 | 3,0 | 2,0 | - |
| (BHTAA-Anteil) [phr] | (3,0) | (1,5) | (1,0) | (-) |
| HMDC 70 Gew.-%-ig [phr] | 2,3 | 2,3 | 2,3 | 2,3 |
| (HMDC-Anteil) [phr] | (1,61) | (1,61) | (1,61) | (1,61) |

Nach dem Mischen der Rezepturbestandteile wurden die so erhaltenen Elastomermaterialien einer Vernetzung auf einer Prüfplattenpresse bei 180 °C während 10 min und einem Druck von 180 bar und danach einer drucklosen Nachtemperung im Umluftofen bei 185 °C für 3 h unterworfen und zu Prüfkörpern verarbeitet.

Die Messwerte für die Shore-Härte A, die Reißdehnung und den Wärmedruckverformungsrest wurden ermittelt und sind in der folgenden Tabelle 2 enthalten.

**TABELLE 2**

| **Beispiel** | **1A** | **1B** | **1C** | **1D** |
|---|---|---|---|---|
| Shore-Härte A | 53,8 | 56,9 | 57,3 | 59,2 |
| Reißdehnung [%] | 385 | 327 | 311 | 271 |
| Wärmedruckverformungsrest [%] | 30,2 | 26,8 | 25,0 | 26,0 |

Die Shore-Härte A wurde nach DIN EN ISO 868 und die Reißdehnung gemäß DIN 53504S2 bestimmt.

Der Wärmedruckverformungsrest wurde gemäß ISO 815, Teil 1 und 2 (Probekörper Typ B) nach einer Einlagerung für 24 h bei 150 °C in Heißluft bei einem Druckverformungsweg von 25 % (bezogen auf die Probenkörperdicke) nach dem Kaltausbau bei 23 °C gemessen. Die Messung der Dicke der Probekörper erfolgte 30 min nach der Entformung.

Wie der Vergleich der Messwerte der Beispiele 1A und 1D (Referenz) mit den Messwerten der erfindungsgemäßen Beispiele 1B und 1C zeigt, ergeben sich bei erfindungsgemäßen Vernetzungsmittelzusammensetzungen ausgewogene gute Messwerte sowohl für die Reißdehnung als auch für den Wärmedruckverformungsrest, während man bei dem Referenzbeispiel 1A zwar eine sehr gute Reißdehnung jedoch einen höheren Wärmedruckverformungsrest sowie eine geringere Shore-Härte A beobachtet.

### Beispiel 2:

Gemäß einem zweiten Beispiel enthalten die Beispielsrezepturen ein AEM-Elastomer aus 100 Gewichtsteilen Vamac G und einen hohen Füllstoffanteil in Form von Ruß N772 (75 phr) und Ruß N550 (15 phr), d.h. in der Summe von insgesamt 90 phr, sowie Vernetzungsmittelzusammensetzungen wie in der folgenden Tabelle 3 im Einzelnen gelistet.

Ferner enthalten alle Beispielrezepturen die folgenden Additive:
2 phr Stearinsäure als Verarbeitungshilfsmittel,
15 phr Weichmacher (Bisoflex T810T, Trimellitsäure-Ester CAS 67989-23-5),
1 phr Polyoxyethylenoctadecyletherphosphat (VANFRE VAM; CAS 62362-49-6) als internes Trennmittel,
0,5 phr Octadecylamin als Fließhilfsmittel sowie
2 phr Dicumyldiphenylamin (CAS 10081-67-1; erhältlich als Dusantox 86 von Duslo a.s.) als Antioxidationsmittel.

Das Vulcofac ACT66 (erhältlich von Safic-Alcan)enthält neben dem Beschleuniger DBU (Gewichtsanteil 52,5 %) 2-Pyrrolidon als Aktivator mit einem Anteil von 17,5 Gew.-%.

Nach dem Mischen der Rezepturbestandteile wurden die so erhaltenen Elastomermaterialien einer Vernetzung auf einer Prüfplattenpresse bei 180 °C während 10 min und einem Druck von 180 bar und danach einer drucklosen Nachtemperung bei 185 °C für 3 h im Umluftofen unterworfen und zu Prüfkörpern verarbeitet.

**TABELLE 3**

| **Beispiel** | **2A** | **2B** |
|---|---|---|
| Vulcofac ACT66 [phr] | 3 | - |
| (DBU-Anteil) [phr] | (1,575) | (-) |
| (2-Pyrrolidon-Anteil) [phr] | (0,525) | (-) |
| aliphat. Amin BHTAA 50%-ig [phr] | - | 6,0 |
| (BHTAA-Anteil) [phr] | (-) | (3,0) |
| HMDC 70%-ig [phr] | 2,5 | 2,5 |
| (HMDC-Anteil) [phr] | (1,75) | (1,75) |
| Shore-Härte A | 78,1 | 70,5 |
| Reißdehnung [%] | 164 | 239 |

Die Messwerte wurden für die Shore Härte A und die Reißdehnung sind in Tabelle 3 angegeben. Die Shore-Härte A wurde wieder gemäß DIN EN ISO 868 und die Reißdehnung gemäß DIN 53504S2 bestimmt.

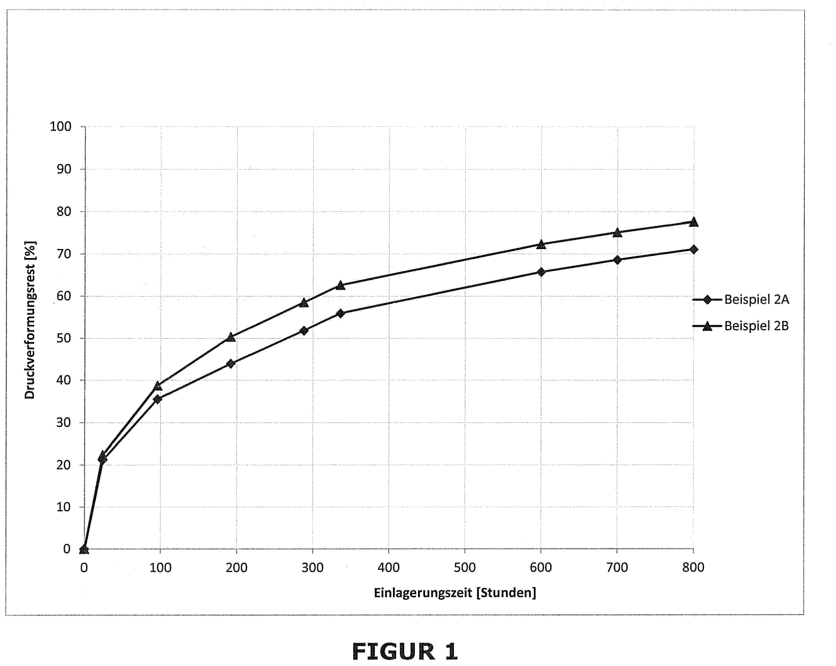

Der Wärmedruckverformungsrest wurde gemäß ISO 815, Teil 1 und 2 (Probekörper Typ B) nach einer Einlagerung bei 175 °C in Heißluft bei einem Druckverformungsweg von 25 % (bezogen auf die Probenkörperdicke) nach dem Heißausbau bestimmt. Die Messung der Dicke der Probekörper erfolgte 30 min nach der Entformung bei 23 °C. Die Werte für die so im Langzeittest erzielten Wärmedruckverformungsreste sind in Figur 1 in Abhängigkeit von der Einlagerungszeit dargestellt.

Der Wärmedruckverformungsrest ist bei der Referenz-Rezeptur 2A deutlich und vor allem dauerhaft geringer als bei der Referenz-Rezeptur 2B, wobei die Referenz-Rezeptur 2B eine deutlich höhere Reißdehnung aufweist.

Dies zeigt, wie schon die Beispiele 1 A bis 1D, die Vorteile erfindungsgemäß abgestimmter Rezepturen, die sowohl ein sekundäres und/oder tertiäres aliphatisches Amin (z.B. BHTAA) und einen Beschleuniger vom DBU-Typ zusammen mit dem Pyrrolidon-Aktivator (z.B. in Form von Vulcofac ACT66) enthalten. Für die Messwerte betreffend die Shore-Härte A, die Reißdehnung und auch den Wärmedruckverformungsrest liegen bei erfindungsgemäßen Rezepturen zwischen den Extremen der Beispiele 2A und 2B.

Beispiel 2 zeigt, dass, selbst wenn sehr hohe Füllstoffgehalte in dem Elastomermaterial vorhanden sind (vorliegend 90 phr), vorteilhaft ausgewogene Eigenschaften erzielbar sind. Erwartungsgemäß sind diese Vorteile auch bei einem Heißausbau bei dem Wärmedruckverformungsrest gegeben.

Die geringer ausfallenden Reißdehnungswerte bei der Rezeptur 2A sind durch eine Annäherung der Rezeptur an die Rezeptur 2B durch die erfindungsgemäße Zugabe eines Anteils eines sekundären und/oder tertiären Amins (z.B. BHTAA) kompensierbar. Hierzu wird das sekundäre und/oder tertiäre Amin in dem Elastomermaterial bevorzugt mit einem Anteil von ca. 0,1 phr bis ca. 2,9 phr, weiter bevorzugt von ca. 1 phr bis ca. 1,5 phr verwendet.

Ein ausgewogenes Verhältnis von beispielsweise BHTAA als aliphatischem Amin einerseits und beispielsweise ACT66 (DBU-Anteil und Pyrrolidon-Komponente) andererseits führt zu dem optimalen Kompromiss von niedrigen Wärmedruckverformungsrestwerten und hohen Reißdehnungswerten wie aus den Beispielen 1B und 1C ersichtlich. Solche optimalen Ergebnisse sind erfindungsgemäß auch bei den hohen Füllstoffgehalten und den entsprechend hohen Shore-Härte A-Werten der Beispiele 2A und 2B bei entsprechenden Anteilen des DBU-Beschleunigers, des Pyrrolidon-Aktivators und der aliphatischen Aminkomponente erzielbar.

## Patentansprüche

1. Vernetzungsmittelzusammensetzung für Elastomermaterialien, umfassend ein diaminisches Vernetzungsmittel, einen Beschleuniger vom Typ der 1,8-Diazabicyclo[5,4,0]undec-7-ene (DBU), einen Aktivator vom Pyrrolidon-Typ sowie ein sekundäres aliphatisches Amin und/oder ein tertiäres aliphatisches Amin.

2. Vernetzungsmittelzusammensetzung nach Anspruch 1, **dadurch gekennzeichnet, dass** die Zusammensetzung zusätzlich ein aldehydisches Amin umfasst, wobei vorzugsweise das Gewichtsverhältnis des Beschleunigers vom DBU-Typ zur Summe der Anteile der aliphatischen und gegebenenfalls aldehydischen Amine in der Vernetzungsmittelzusammensetzung ca. 25 : 75 bis ca. 99 : 1 beträgt.

3. Vernetzungsmittelzusammensetzung nach Anspruch 1 oder 2, **dadurch gekennzeichnet, dass** das diaminische Vernetzungsmittel ausgewählt ist aus Hexamethylendiamincarbamat, N,N-Dicinnamylidendiamincarbamat, 4,4-Diaminodicyclohexylmethan, m-Xylylendiamin, 4,4-Diaminodiphenylmethan, 4,4-Diaminodiphenylether, 2,2-Bis[4-(4-aminophenoxy)phenyl]propan sowie Hexamethylendiamin.

4. Vernetzungsmittelzusammensetzung nach einem der Ansprüche 1 bis 3, **dadurch gekennzeichnet, dass** der Gewichtsanteil des Aktivators vom Pyrrolidon-Typ bezogen auf den Anteil des Beschleunigers vom DBU-Typ in der Vernetzungsmittelzusammensetzung ca. 15 Gew.-% bis ca. 50 Gew.-% beträgt.

5. Vernetzungsmittelzusammensetzung nach einem der Ansprüche 1 bis 4, **dadurch gekennzeichnet, dass** das aliphatische Amin aus sekundären Aminen ausgewählt ist, insbesondere sekundären Fettsäurealkylaminen, bevorzugt Di-kokos-alkylamin (di-coco-alkyl amine, DCAA), Di-(hydriertes Talgfett)-amin, Bis(hydrogenated tallow alkyl) amin (BHTAA) und Di-stearylamin, sowie tertiären Aminen, insbesondere Behenyl-dimethylamin, Octadecyl-dimethylamin, Di-kokosalkyl-methyl-amin (di-coco-alkyl methyl amine, DCMAA), Di-hydriertes Talgfett-methyl-amin (bis-(hydrogenated tallow alkyl) methyl amine, BHTMAA), Di-hydriertes Talgfett-s-alkyl-amin (bis(hydrogenated tallow) secondary alkyl amine BHTAsA), Tri-Hexadecylamin oder Mischungen der vorgenannten Amine.

6. Vernetzungsmittelzusammensetzung nach einem der Ansprüche 2 bis 5, **dadurch gekennzeichnet, dass** das aldehydische Amin ausgewählt ist aus 3,5-Diethyl-1,2-dihydro-1-phenyl-2-propyl-pyridin (PDHP), Kondensationsprodukten aus Butyraldehyd und Anilin und Kondensationsprodukten aus Butyraldehyd und Butylamin.

7. Verwendung einer Vernetzungsmittelzusammensetzung gemäß einem der Ansprüche 1 bis 6 zur Vernetzung eines diaminisch vernetzbaren Elastomermaterials.

8. Verwendung nach Anspruch 7, **dadurch gekennzeichnet, dass** das Elastomermaterial eines oder mehrere der Elastomere der Gruppe von HNBR, ACM, EACM, DENKA und FKM umfasst.

9. Elastomermaterial umfassend eines oder mehrere der Elastomeren der Gruppe HNBR, ACM, EACM, DENKA und FKM sowie eine Vernetzungsmittelzusammensetzung gemäß einem der Ansprüche 1 bis 6.

10. Elastomermaterial nach Anspruch 9, **dadurch gekennzeichnet, dass** der Anteil des Beschleunigers vom DBU-Typ in dem Elastomermaterial ca. 1 phr bis ca. 10 phr, vorzugsweise ca. 2 phr bis ca. 4 phr, beträgt; und/oder, dass das diaminische Vernetzungsmittel in dem Elastomermaterial mit einem Anteil von ca. 1 phr bis ca. 4 phr, vorzugsweise von ca. 1,5 phr bis ca. 2,5 phr, enthalten ist, und/oder dass der Anteil des sekundären aliphatischen und/oder tertiären aliphatischen Amins oder der Amine in dem Elastomermaterial ca. 0,1 phr bis ca. 2,9 phr, bevorzugt ca. 1 phr bis ca. 1,5 phr beträgt.

11. Elastomermaterial nach Anspruch 9 oder 10, **dadurch gekennzeichnet, dass** das Elastomermaterial einen oder mehrere Füllstoffe enthält, wobei der oder die Füllstoffe bevorzugt ausgewählt sind aus inaktiven bis aktiven Rußtypen oder hellen Füllstoffen, insbesondere Kieselsäuren, Kaolinen, Glimmer, Feldspat, Talkum, Calciumcarbonat, Quarz, Kieselgur, Cristobalit, Bariumsulfat (in natürlich vorkommender oder gefällter Form); wobei vorzugsweise der Anteil des oder der Füllstoffe in dem Elastomermaterial ca. 50 phr oder mehr, vorzugsweise weniger als ca. 120 phr, beträgt.

12. Dichtung umfassend ein Elastomerdichtungselement hergestellt unter Verwendung eines Elastomermaterials nach einem der Ansprüche 9 bis 11.

13. Dichtung nach Anspruch 12, **dadurch gekennzeichnet, dass** die Dichtung einen Träger umfasst, auf welchem das Elastomerdichtungselement angeordnet ist; oder dass die Dichtung einen Träger umfasst, welcher teilweise oder vollständig von dem Elastomerdichtungselement umgeben ist; oder dass die Dichtung im Wesentlichen aus dem Elastomerdichtungselement besteht.

14. Dichtung nach Anspruch 12 oder 13, **dadurch gekennzeichnet, dass** die Dichtung als eine Ölwannendichtung oder als eine Abgasdichtung ausgebildet ist.

15. Kraftstoffleitung hergestellt unter Verwendung eines Elastomermaterials nach einem der Ansprüche 9 bis 11.

## Claims

1. Cross-linking agent composition for elastomer materials, comprising a diamine cross-linking agent, an accelerator of the type of the 1,8-diazabicyclo[5,4,0]undec-7-ene (DBU), an activator of the pyrrolidone type, as well as a secondary aliphatic amine and/or a tertiary aliphatic amine.

2. Cross-linking agent composition in accordance with Claim 1, **characterized in that** the composition additionally comprises an aldehydic amine, wherein the weight ratio of the accelerator of the DBU type to the sum of the amounts of the aliphatic and, optionally, aldehydic amines in the cross-linking agent composition is preferably about 25 : 75 to about 99 : 1.

3. Cross-linking agent composition in accordance with Claim 1 or 2, **characterized in that** the diamine cross-linking agent is selected from hexamethylene diamine carbamate, N,N-dicinnamylidene diamine carbamate, 4,4-diaminodicyclohexylmethane, m-xylylenediamine, 4,4-diaminodiphenylmethane, 4,4-diaminodiphenylether, 2,2-bis[4-(4-aminophenoxy)phenyl]propane, as well as hexamethylenediamine.

4. Cross-linking agent composition in accordance with any one of Claims 1 to 3, **characterized in that** the amount by weight of the activator of the pyrrolidone type in relation to the amount of the accelerator of the DBU type in the cross-linking agent composition is about 15% by weight to about 50% by weight.

5. Cross-linking agent composition in accordance with any one of Claims 1 to 4, **characterized in that** the aliphatic amine is selected from secondary amines, in particular secondary fatty acid alkyl amines, preferably di-coco-alkylamine (DCAA), di-(hydrogenated tallow fat)-amine, bis(hydrogenated tallow alkyl) amine (BHTAA), and di-stearylamine, as well as tertiary amines, in particular behenyl-dimethylamine, octadecyl-dimethylamine, di-coco-alkyl methyl amine (DCMAA), bis(hydrogenated tallow alkyl) methyl amine (BHTMAA), bis(hydrogenated tallow) secondary alkyl amine (BHTAsA), tri-hexadecylamine, or mixtures of the aforementioned amines.

6. Cross-linking agent composition in accordance with any one of Claims 2 to 5, **characterized in that** the aldehydic amine is selected from 3,5-diethyl-1,2-dihydro-1-phenyl-2-propyl-pyridine (PDHP), condensation products from butyraldehyde and aniline and condensation products from butyraldehyde and butylamine.

7. Use of a cross-linking agent composition in accordance with any one of Claims 1 to 6 for cross-linking a diamine cross-linkable elastomer material.

8. Use in accordance with Claim 7, **characterized in that** the elastomer material comprises one or more of the elastomers of the group of HNBR, ACM, EACM, DENKA, and FKM.

9. Elastomer material comprising one or more of the elastomers of the group HNBR, ACM, EACM, DENKA, and FKM, as well as a cross-linking agent composition in accordance with any one of Claims 1 to 6.

10. Elastomer material in accordance with Claim 9, **characterized in that** the amount of the accelerator of the DBU type in the elastomer material is about 1 phr to about 10 phr, preferably about 2 phr to about 4 phr; and/or **in that** the diamine cross-linking agent in the elastomer material is present in an amount of about 1 phr to about 4 phr, preferably about 1.5 phr to about 2.5 phr, and/or **in that** the amount of the secondary aliphatic and/or tertiary aliphatic amine or the amines in the elastomer material is about 0.1 phr to about 2.9 phr, preferably about 1 phr to about 1.5 phr.

11. Elastomer material in accordance with Claim 9 or 10, **characterized in that** the elastomer material contains one or more fillers, wherein the filler or fillers are preferably selected from inactive to active carbon black types or light fillers, in particular silicas, kaolins, mica, feldspar, talc, calcium carbonate, quartz, diatomaceous earth, cristobalite, barium sulfate (in naturally occurring or precipitated form); wherein the amount of the filler or fillers in the elastomer material is preferably about 50 phr or more, preferably less than about 120 phr.

12. Gasket comprising an elastomer gasket element produced using an elastomer material in accordance with any one of Claims 9 to 11.

13. Gasket in accordance with Claim 12, **characterized in that** the gasket comprises a support on which the elastomer gasket element is arranged; or **in that** the gasket comprises a support which is partially or entirely enclosed by the elastomer gasket element; or **in that** the gasket substantially consists of the elastomer gasket element.

14. Gasket in accordance with Claim 12 or 13, **characterized in that** the gasket is configured as an oil pan gasket or as an exhaust gas gasket.

15. Fuel line produced using an elastomer material in accordance with any one of Claims 9 to 11.

## Revendications

1. Composition d'agent de réticulation pour matériaux élastomères, comprenant un agent de réticulation diaminique, un accélérateur du type du 1,8-diazabicyclo[5,4,0]undéc-7-ène (DBU), un activateur de type pyrrolidone ainsi qu'une amine aliphatique secondaire et/ou une amine aliphatique tertiaire.

2. Composition d'agent de réticulation selon la revendication 1, **caractérisée en ce que** la composition comprend en outre une amine aldéhydique, où de préférence le rapport en poids de l'accélérateur de type DBU à la somme des proportions des amines aliphatiques et éventuellement aldéhydiques dans la composition d'agent de réticulation est d'environ 25 : 75 à environ 99 : 1.

3. Composition d'agent de réticulation selon la revendication 1 ou 2, **caractérisée en ce que** l'agent de réticulation diaminique est choisi parmi l'hexaméthylènediamine carbamate, le N,N-dicinnamylidènediamine carbamate, le 4,4-diaminodicydohexylméthane, la m-xylylènediamine, le 4,4-diaminodiphénylméthane, le 4,4-diamino-diphényléther, le 2,2-bis[4-(4-aminophénoxy)phényl]propane ainsi que l'hexaméthylènediamine.

4. Composition d'agent de réticulation selon l'une des revendications 1 à 3, **caractérisée en ce que** la proportion en poids de l'activateur de type pyrrolidone par rapport à la proportion de l'accélérateur de type DBU dans la composition d'agent de réticulation est d'environ 15% en poids à environ 50% en poids.

5. Composition d'agent de réticulation selon l'une des revendications 1 à 4, **caractérisée en ce que** l'amine aliphatique est choisie parmi les amines secondaires, en particulier les alkylamines d'acide gras secondaires, de préférence la di-coco-alkylamine (di-coco-alkylamine, DCAA), la di-(graisse de suif hydrogénée)-amine, la bis(hydrogenated tallow alkyl)amine (BHTAA) et la di-stéarylamine, ainsi que les amines tertiaires, en particulier la béhényl-diméthylamine, l'octadécyl-diméthylamine, la di-coco-alkyl-méthyl-amine (di-coco-alkylméthylamine, DCMAA), la di-graisse de suif hydrogénée-méthyl-amine (bis-(hydrogenated tallow alkyl)méthylamine, BHTMAA), la di-graisse de suif hydrogénée-s-alkyl-amine (bis(hydrogenated tallow)alkylamine secondaire BHTAsA), la tri-hexadécylamine ou les mélanges des amines précitées.

6. Composition d'agent de réticulation selon l'une des revendications 2 à 5, **caractérisée en ce que** l'amine aldéhydique est choisie parmi la 3,5-diéthyl-1,2-dihydro-1-phényl-2-propyl-pyridine (PDHP), les produits de condensation du butyraldéhyde et de l'aniline et les produits de condensation du butyraldéhyde et de la butylamine.

7. Utilisation d'une composition d'agent de réticulation selon l'une des revendications 1 à 6 pour la réticulation d'un matériau élastomère réticulable par voie diaminique.

8. Utilisation selon la revendication 7, **caractérisée en ce que** le matériau élastomère comprend un ou plusieurs des élastomères du groupe de HNBR, ACM, EACM, DENKA et FKM.

9. Matériau élastomère comprenant un ou plusieurs des élastomères du groupe HNBR, ACM, EACM, DENKA et FKM ainsi qu'une composition d'agent de réticulation selon l'une des revendications 1 à 6.

10. Matériau élastomère selon la revendication 9, **caractérisé en ce que** la proportion de l'accélérateur de type DBU dans le matériau élastomère est d'environ 1 pce à environ 10 pce, de préférence d'environ 2 pce à environ 4 pce; et/ou **en ce que** l'agent de réticulation diaminique est contenu dans le matériau élastomère en une proportion d'environ 1 pce à environ 4 pce, de préférence d'environ 1,5 pce à environ 2,5 pce, et/ou **en ce que** la proportion de l'amine aliphatique secondaire et/ou aliphatique tertiaire ou des amines dans le matériau élastomère est d'environ 0,1 pce à environ 2,9 pce, de préférence d'environ 1 pce à environ 1,5 pce.

11. Matériau élastomère selon la revendication 9 ou 10, **caractérisé en ce que** le matériau élastomère contient une ou plusieurs charges, où la ou les charges sont de préférence choisies parmi les types inactifs à actifs de noir de carbone ou les charges claires, en particulier les silices, les kaolins, le mica, le feldspath, le talc, le carbonate de calcium, le quartz, le kieselguhr, la cristobalite, le sulfate de baryum (sous forme naturelle ou précipitée); où de préférence la proportion de la ou des charges dans le matériau élastomère est d'environ 50 pce ou plus, de préférence inférieure à environ 120 pce.

12. Joint comprenant un élément d'étanchéité en élastomère produit au moyen d'un matériau élastomère selon l'une des revendications 9 à 11.

13. Joint selon la revendication 12, **caractérisé en ce que** le joint comprend un support sur lequel est disposé l'élément d'étanchéité en élastomère; ou **en ce que** le joint comprend un support qui est partiellement ou totalement entouré par l'élément d'étanchéité en élastomère; ou **en ce que** le joint consiste essentiellement en l'élément d'étanchéité en élastomère.

14. Joint selon la revendication 12 ou 13, **caractérisé en ce que** le joint est réalisé sous forme de joint de bac à huile ou de joint pour gaz d'échappement.

15. Conduite de carburant produite au moyen d'un matériau élastomère selon l'une des revendications 9 à 11.
